# EUROPEAN PATENT SPECIFICATION

(11) **EP 2 906 107 B1**
(45) Date of publication and mention of the grant of the patent: **12.07.2017**
(21) Application number: 13845169.5
(22) Date of filing: 10.10.2013
(51) Int. Cl.: A61B 5/00

(54) **PATIENT SIMULATION SYSTEM FOR MEDICAL SERVICES OR DIAGNOSTIC MACHINES**
PATIENTENSIMULATIONSSYSTEM FÜR MEDIZINISCHE DIENSTE ODER DIAGNOSEMASCHINEN
SYSTÈME DE SIMULATION DE PATIENT POUR SERVICES MÉDICAUX OU MACHINES DE DIAGNOSTIC

(30) Priority: 10.10.2012 US 201261712250 P
(43) Date of publication of application: 19.08.2015
(73) Proprietor: Tallman, Richard, Poway, California 92064 (US)
(72) Inventor: Tallman, Richard, Poway, California 92064 (US)
(74) Representative: Derry, Paul Stefan
(86) International application number: PCT/US2013/064417
(87) International publication number: WO 2014/059198

(56) References cited:
- WO-A2-2010/149726
- JP-A- 2005 114 764
- JP-A- 2005 114 764
- JP-A- 2009 217 042
- JP-A- 2009 217 042
- KR-A- 20120 102 178
- KR-A- 20120 102 178
- US-A1- 2008 227 073
- US-A1- 2008 227 073
- US-A1- 2008 293 025
- US-A1- 2008 293 025
- US-A1- 2010 196 865
- US-A1- 2010 196 865

## Description

This application claims priority to provisional application, US Serial No. 61/712,250, filed October 10, 2012, entitled "PATIENT SIMULATION SYSTEM FOR MEDICAL SERVICES OR DIAGNOSTIC MACHINES,".

### FIELD OF TECHNOLOGY

This disclosure relates generally to the technical fields of medical devices, and in one example embodiment, this disclosure relates to a method, apparatus and system of patient simulation with diagnostic and patient services machines.

### BACKGROUND

This disclosure relates generally to the technical fields of medical devices, and in one example embodiment, this disclosure relates to a method, apparatus and system of patient simulation with diagnostic and patient services machines.

A patient simulator (e.g., a simulation apparatus) may be used in the training of health-care students (e.g., pharmacy students, nursing students, medical students). The patient simulator may provide insight and experience without the associated risks associated with on-the-job training with actual patients. However, the patient simulator may be limited in its ability to simulate a range of possible medical conditions. As a result, the medical simulator may not be usable in a wide range of medical training. JP 2005114764 A discloses an example of such medical simulators.

One type of the patient simulator may be implemented substantially in software. Using a graphical user interface (GUI) and software programming, the patient simulator implemented substantially in software may only provide limited insight into an actual patient care scenario because of its partial approximation of a real-world physical interaction. Further, a simulation conducted substantially in software may lack depth given that the simulated experience may not adequately model external stressors (e.g., presence of blood, screaming patients, multiple complications among different patients simultaneously). Therefore, the patient simulator implemented solely in software may not adequately prepare the health care students for actual patient care scenarios in the physical world. This lack of preparation can result in errors, omissions, and sometimes a loss of life.

### SUMMARY

A hydraulic based, hardware and software simulation system which models a human patient and attaches to any of a variety of extracorporeal cardiopulmonary support devices such as a heart lung machine (HLM), extracorporeal membrane oxygenation (ECMO) machine, emergency cardiac life support (ECLS) device, ventricular assist device (VAD), dialysis machines, hyperthermic intraperitoneal chemotherapy (HIPEC) machine, Aortic Balloon pump etc.

The system uses proprietary models of the cardiovascular system, the respiratory system, the gas exchanged by an artificial lung, and drug interactions and combines them into a realistic and reactive model of the human body.

The models in the system are combined with the appropriate sensors and actuators to detect and react appropriately to the impacts imposed by the various extracorporeal cardiopulmonary support devices on the human body. These reactions include the dynamic and long-term impact on the cardiovascular system, the respiratory system, the hematological system, and the renal system.

The patient reactions or changes are displayed on a variety of 'virtual' operating room (O.R.) and ICU monitors that are part of the simulator. Displays include signals from singular systems or any combination of signals from systems such as a pulse oximeter, a cerebral oximeter, an in-line blood gas monitor, a blood gas analyzer, an activated clotting time (ACT) analyzer, EKG monitor, a blood pressure monitor, or bispectral index (BIS) cerebral monitor.

A predetermined clinical scenario is used to control the virtual patient by displaying of appropriate monitors, providing verbal commands and alerts, displaying and manipulating the O.R. clock, and providing for the sequence of events that make a realistic therapeutic or operating room environment. This scenario can be pre-established and loaded into the simulator using a single spreadsheet file.

Configuration of the patient simulator is accomplished with predetermined clinical scenarios. It comprises displaying the appropriate monitors available, choice of verbal commands and alerts, O.R. clock manipulation, and sequencing of events. These custom clinical scenarios can be pre-established and loaded into the patient simulator using a single spreadsheet. The user or operator (trainer) has the option to write custom scenarios for the trainee and can apply clinical data including arterial pressure, pulmonary artery pressure, EKG-including multiple arrhythmias, ventilator, A.C.T. Plus, arterial color duplex imaging (CDI), venous CDI, blood monitoring unit (BMU), spectrum medical variable input patient electronic record, HMS, blood gas analyzer, and NIRS. In addition, patient-specific factors (sex, height, weight, body surface area (BSA)), physiologic factors including left ventricular (LV) and right ventricular (RV) contractility, heart rate, depth of anesthesia and metabolic rate can all be included in the clinical scenario.

The system maintains an electronic medical record that can be saved and accessed during or after the simulator system exercise for a given clinical scenario. This medical record contains all of the time-stamped information relevant to the case including patient vital signs, medications given and special events and circumstances. In addition, this electronic medical record can be sent out in real time to various data management systems (DMSs) designed to collect and maintain clinical data during surgical cases. This is accomplished by communication via the serial port of the computing device using standard communication protocols.

The methods, operations, processes, systems, and apparatuses disclosed herein may be implemented in any means for achieving various aspects, and may be executed in a form of a machine-readable medium, and/or a machine accessible medium, embodying a set of instructions that, when executed by a machine or a data processing system (e.g., a computer system), in one or more different sequences, cause the machine to perform any of the operations disclosed herein. Other features will be apparent from the accompanying drawings and from the detailed description that follows. Accordingly, the specification and drawings are to be regarded in an illustrative rather than a restrictive sense.

### BRIEF DESCRIPTION OF THE DRAWINGS

Example embodiments are illustrated by way of example and not limitation in the figures of the accompanying drawings, in which like references indicate similar elements and in which:
**Figure 1** is a diagram of a medical simulation system coupled to one or more therapeutic devices, according to one or more embodiments.
**Figure 2**A is a block diagram of the functional inputs and outputs of the simulation system, according to one or more embodiments.

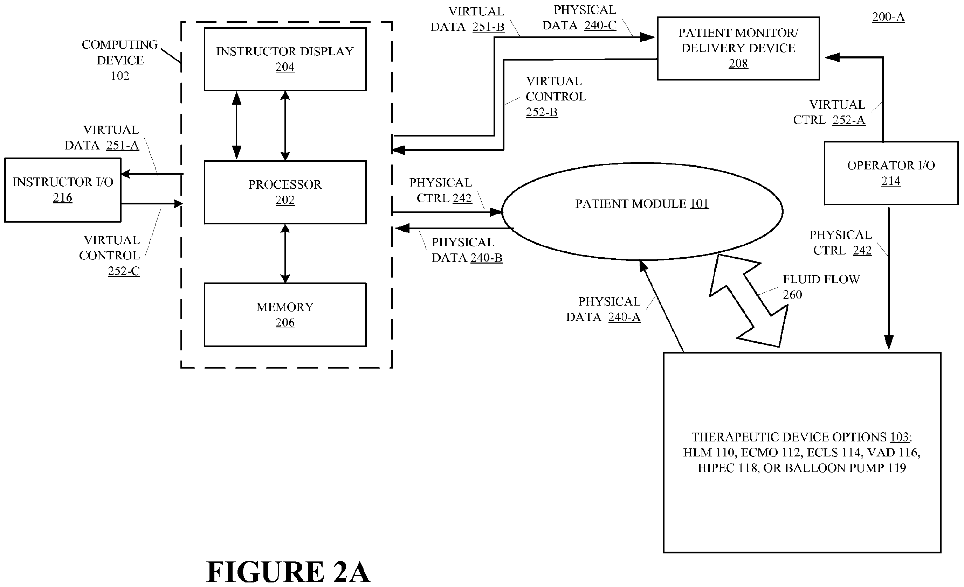

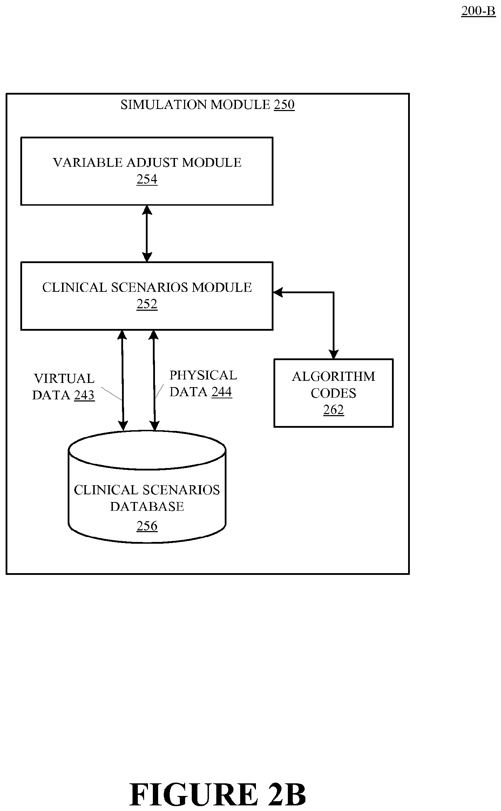

**Figure 2**B is a block diagram of the functional inputs and outputs of the simulation module portion of the simulation system, according to one or more embodiments.

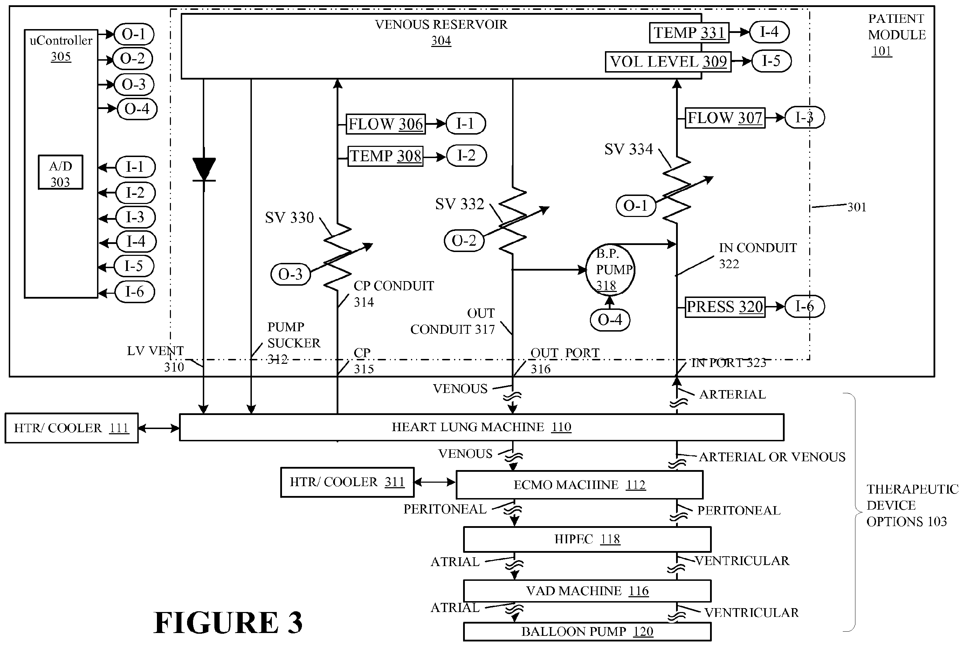

**Figure 3** is a schematic of the patient module, according to one or more embodiments.

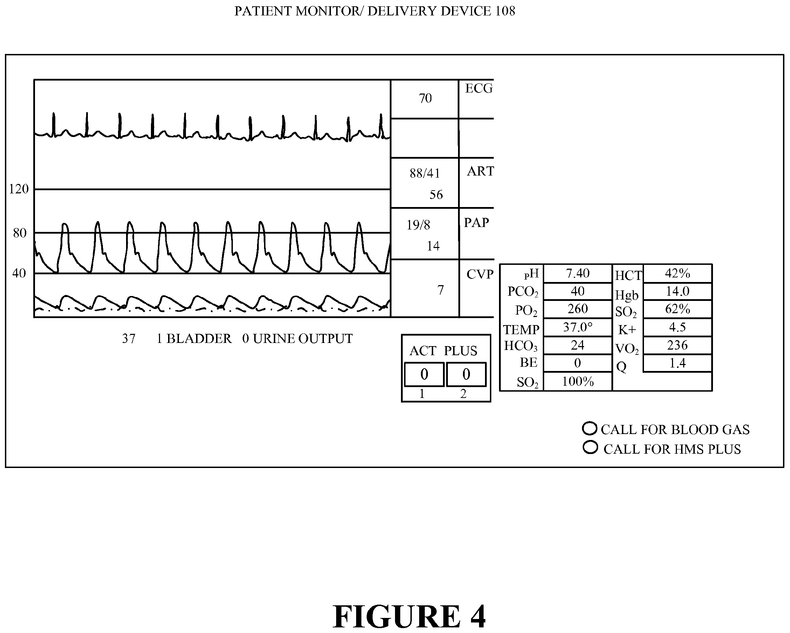

**Figure 4** is a display of the patient monitor/ delivery device, according to one or more embodiments.

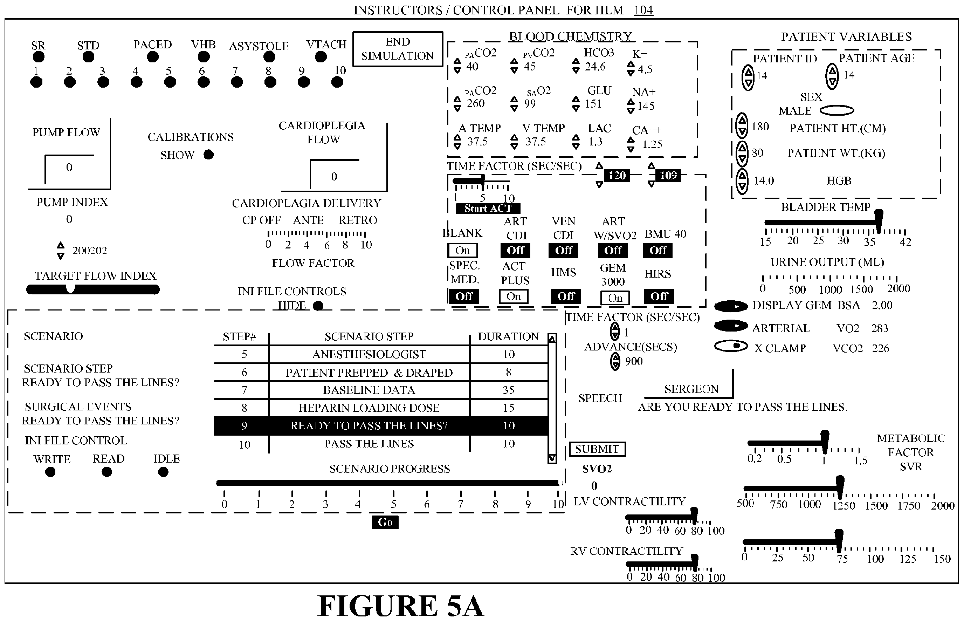

**Figure 5A** is a graphical user interface (GUI) of the simulation module for a heart-lung machine (HLM), as shown on the instructor display, according to one or more embodiments.

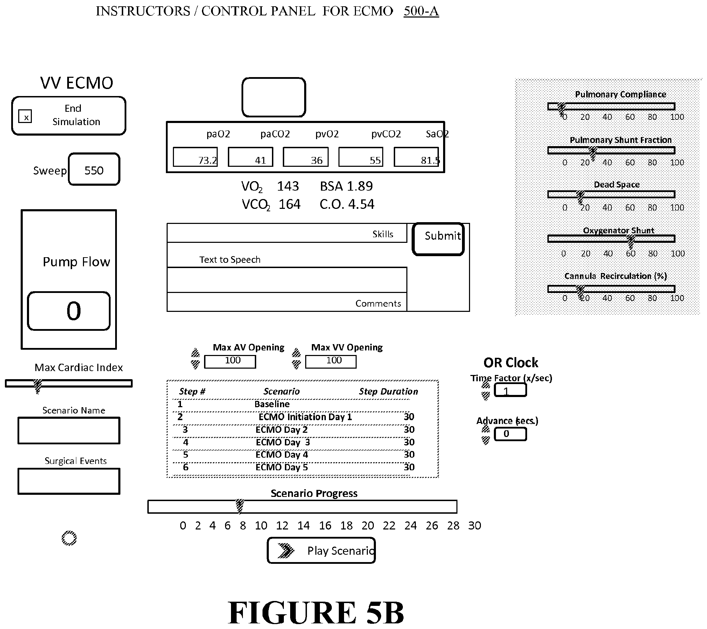

**Figure 5B** is a graphical user interface (GUI) of the simulation module for an extracorporeal membrane oxygenation (ECMO), as shown on the instructor display, according to one or more embodiments.

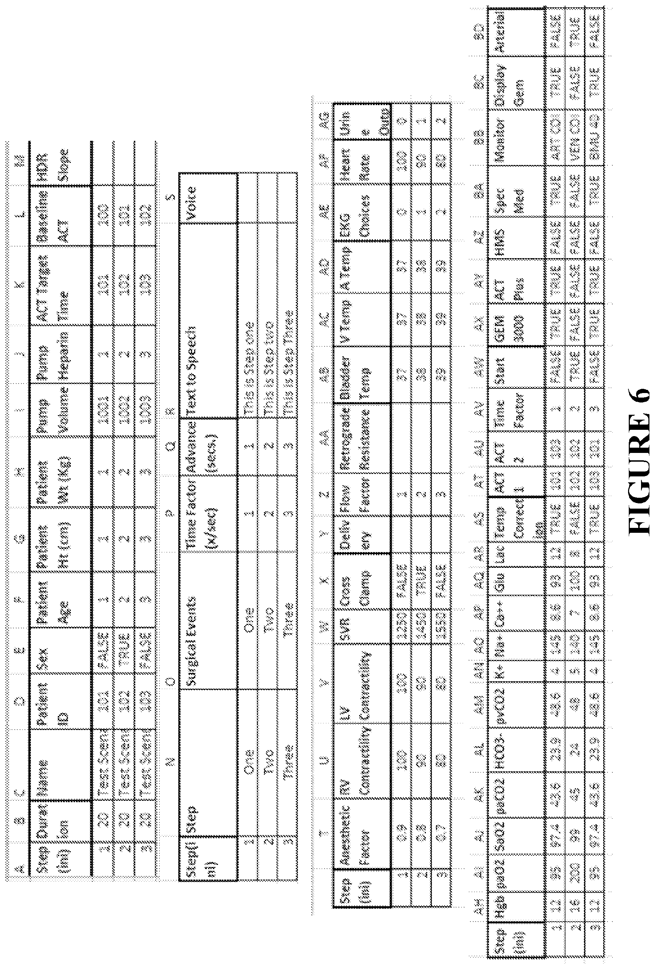

**Figure 6** is a clinical scenario spreadsheet, according to one or more embodiments

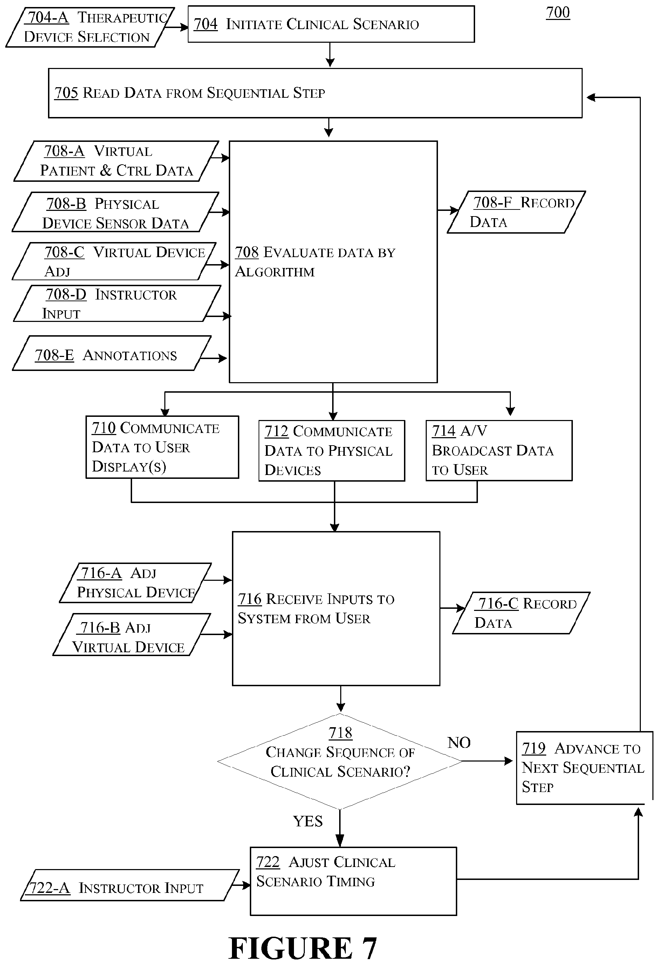

**Figure 7** is a flowchart of a process simulating a patient interaction with a therapeutic machine, according to one or more embodiments.

Other features of the present embodiments will be apparent from the accompanying drawings and from the detailed description that follows.

### DETAILED DESCRIPTION

The invention is defined by the features of claim 1 and is a system of patient simulation for medical services and diagnostic machines. In the following description, for the purposes of explanation, numerous specific details are set forth in order to provide a thorough understanding of the various embodiments. It will be evident, however to one skilled in the art that various embodiments may be practiced without these specific details.

### Patient Simulator

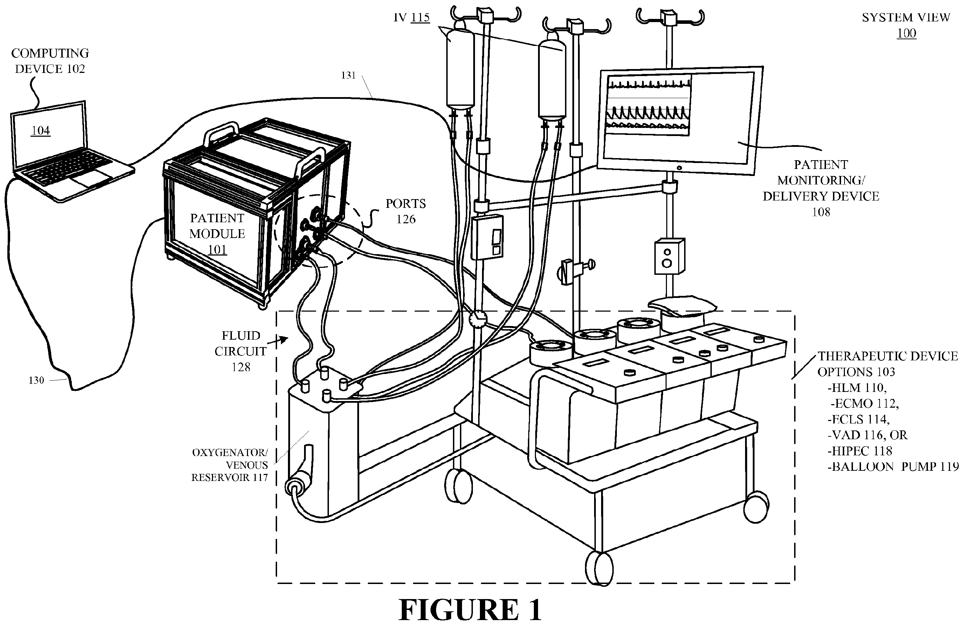

Referring to **Figure 1**, a medical simulation system 100 coupled to one or more therapeutic device options 103 is shown, accordance with one or more embodiments. Medical simulation system 100 includes a patient module 101 that represents a body of a patient, electrically coupled to a computing device 102. Patient module 101 contains a fluid circuit, input and output ports, fluid sensors, and control devices, as described in more detail in subsequent **Figure 3****.** Computing device 102 implements one or more algorithms to simulate and /or evaluate vital signs of the patient module 101 during an execution of a clinical scenario. A graphical user interface (GUI) on instructor display 104 shows simulation system options, clinical scenario results, etc. thereby allowing the instructor to control and manipulate the simulation, as described in more detail in **Figures 5A-5B****.**

A patient monitor/delivery device 108 performs many functions as well, such as displaying physical data that was measured in patient module 101 and at least a portion of the clinical scenario. Furthermore, patient monitor/delivery device 108 displays virtual data calculated by an algorithm in computing device 102, to which it is coupled, as well as clinical scenario data read from memory in computing device. Patient monitor/delivery device 108 also accepts input from a system operator, or user, who is being trained as a clinician on the simulation system 100, and who can select virtual control data for virtual portions of therapeutic devices or for an entire therapeutic device and communicate that virtual data back to computing device 102. For example, patient monitor/ delivery device 108 can display an oxygen (02) blood level of the patient, or receive a clinician's input to increase a virtual control of 02 delivery to the ECMO machine 112. In combination with the clinician physically changing a blood flow rate setting on the actual ECMO machine 112 itself, a resulting increase of the patient module blood level is shown as increased on the same display, with the blood level calculation being performed by the computing device 102. Patient monitor/delivery device 108 also provides audio/visual (A/V) training materials during the clinical scenario to simulate a real-life surgical operation or other hospital setting in which the therapeutic device could be used. Consequently, a display function is implemented as well as a delivery function of virtual controls and drug and diagnostic testing by patient display / delivery device. Alternatively, separate discrete screens can be provided for each function.

Both the patient module 101 and computing device 102 of simulation system 100 are flexibly designed to interface with a plurality of extracorporeal therapeutic device options 103, including standalone HLM machine 110, ECMO machine 112, ECLS 114, VAD machine 116, HIPEC 118 and balloon pump 119 (only HLM shown) directly via an external fluid circuit 128 and indirectly via an electrical coupling 130, e.g.,., a 10/100 Base-T Cat 5 cable. Patient module 101 has a set of input and output ports 126 and internal components packaged in a small form factor aluminum housing (400mm x 330mm x 280mm, for example) that is easily transported and substantially rugged, with a fast set-up time that supports any of the therapeutic device options 103. Computing device 102 has a superset of programming capability to be selectively implemented for a chosen one of the therapeutic device options 103. Peripheral patient support, such as IV equipment 115 and oxygenator /venous reservoir 117, couple to the simulation system 100 to manage fluid supplies realistically. Thus, compared to a medical simulator that is designed to couple only to a single specific therapeutic device, the present embodiment has much greater flexibility and usefulness, thereby reducing cost, and increasing training effectiveness.

Patient module 101 provides basic core fluid functions (e.g., arterial flow rate and pressure) for realistic fluid coupling to therapeutic devices, while computing device 102 provides any additional fluid functionality (e.g., related central venous pressure (CVP), etc.) and simulating of patient vital sign (such as EKG, blood pH level, etc.) via software. This allows much greater flexibility of the simulation system 100 to interface with any of a wide variety of therapeutic device options 103. Consequently, simulation system 100 provides a holistic simulation vehicle for cost-effectively training clinicians. Physical material, e.g., fluid, is communicated between patient module 101 and the therapeutic device options 103. Signals from computing device 102 are used to control physical components in the patient module 101, such as a stepper valve. Physical data, such as fluid pressure, is communicated from patient module 101 to computing device 102.

In one embodiment, a comma-separated values (CSV) electronic document, e.g. a spreadsheet, dictates the clinical scenario, with field-separated columns for over 50 physiological and monitoring variables in a practically unlimited number of sequential steps, represented by at least one line of data. The spreadsheet is read by the computing device, and evaluated by the algorithmic application software in combination with the measured fluid data, and the virtually selected variable to provide the simulated patient vital signs and long-term clinical course. A virtually selected variable is a variable or a setting that a clinician sets via the patient monitor/delivery device 108 that is used by computing device 102 to algorithmically calculate a related, but not physically measured, patient parameter, such as pulmonary artery blood pressure.

### Functional Control Plane

Referring now to **Figure 2A**, a block diagram 200-A of the functional inputs and outputs of the simulation system is shown, according to one or more embodiments. Computing device 102 includes a processor 202 coupled to memory 206 to receive physical data 240-B from the patient module and to implement one or more algorithms to simulate vital signs of a hypothetical patient simulated by the patient module 101 during an execution of a clinical scenario. In one embodiment, physical data includes fluid pressure and flow rates, as described in **Figure 3****.**

Instructor display 204 illustrates data related to the clinical scenario. Instructor I/O 216 is any communication device and connection such as a keyboard, mouse, touch screen, wireless device, network connection for remote access, etc., to share data between an instructor and computing device 102. Physical control is provided from computing device 102 to patient module 101 to implement clinical scenario conditions, e.g., a venous stepper valve is closed in response to a clinical scenario condition of a patient bleeding out. Operator I/O 214 implements physical control input 242 to therapeutic device options 103 by manually touching their controls. Operator I/O 214 also implements virtual control of therapeutic device options 103 via virtual control input 252-A to patient monitor/delivery device 208 and propagated virtual control input 252-B to computing device 102. This effectuates a change by operator I/O 214 by algorithmically calculating the effect on patient vital signs and long term clinical care, and passing that resulting virtual data back to patient monitor /delivery device 208 via virtual data 251-B and to instructor display as virtual data 251-A. Thus, a clinician may selectively choose a drug delivery option in a GUI displayed on the touch screen of the patient monitor/delivery device 108. That selection would be communicated to computing device 102 that would then algorithmically consider the input when evaluating other variables to determine the vital signs that the computing device will simulate and then display on the patient monitor/delivery device 108.

Physical data 240-A, e.g., flow, pressure, and temperature, is communicated from therapeutic device options 103 via the fluid transfer. Physical data 240-B is communicated from patient module 101 to computing device 102 by virtue of fluid sensors in patient module 101, and is read by computing device 102. The clinical scenarios and parameters can be recorded directly to memory 206, at a desired sampling rate, or to a printer (not shown) in response to a touch screen request by instructor I/O 216 or operator/clinician I/O 214. Simulation system 100 also has an ability to add different types and sizes of flow sensors to accommodate a wide range of simulated patient sizes.

Referring now to **Figure 2**B, a block diagram 200-B shows the functional inputs and outputs of the simulation module 250 portion of the simulation system 100 is shown, according to one or more embodiments. Simulation module 250 is implemented in computing device 102 by storing clinical scenario database 256 and algorithm codes 262 in memory 206 and by accessing and executing same using processor 202. Inputs to simulation module 250 include physical data 240-B from patient module 101, virtual control 252-B from patient monitor/delivery device 208, and instructor I/O 216, as shown in **Figure 2A****.** Both virtual data 251 and physical data 240 are stored and retrieved from clinical scenarios database 256 during the execution of the clinical scenario.

Referring now to **Figure 3****,** a schematic of the patient module 101 is shown, according to one or more embodiments. Patient module 101 includes a fluid circuit 301 and includes a microcontroller 305, coupled to each other for simulating a hydraulic function of a hypothetical patient as shown in the simulation system 100 of **Figure 1****.** Fluid circuit 301 contains conduits, sensors, and control devices coupled to each other. In particular, fluid circuit 301 includes an input (IN) conduit, or line, 322 having an input port 323, a pressure transducer 320 for sensing input pressure, a variable stepper motor proportioning valve (stepper valve or SV) 334, shown as a variable resistance symbol, for varying the resistance on the input conduit, or line, 322 per the clinical scenario, and a flow meter 307 for measuring a flow rate of fluid in the input conduit 322. Similarly, fluid circuit 301 includes an output (OUT) conduit, or line, 317 having an output port 316, and a variable stepper motor proportioning valve 332 for varying the flow restriction, or resistance, on the output conduit 317 per the clinical scenario. An additional input conduit is provided with cardiopulmonary (CP) input conduit 314 having a CP port 315, a variable stepper motor proportioning valve (SV) 330 for varying the resistance on the CP conduit 314 line per the clinical scenario, a flow meter (FLOW) 306 for measuring a flow rate of fluid in the CP conduit 314, and a temperature sensor 308 for measuring temperature (TEMP) of fluid in CP conduit 314. Two additional lines are provided as a pump sucker 312, which provides suction of blood from fluid circuit 301 similar to that used by a surgeon to remove blood from the chest cavity during heart surgery, and a vent 310, which allows for the purging of air from the fluid circuit 301. All these described lines and conduits are disposed parallel to each other from the ports to the venous reservoir 304, to which they are appropriately coupled. Input ports 323, 316, 315 and ports for pump sucker 312 and vent 310, are shown in **Figure 1** as ports 126. The specific function and settings of the valves and the impact of the sensors in the fluid circuit 301 are described hereinafter, based upon which of the therapeutic device options 103 is coupled to the patient module 101. The variable stepper motor proportioning valves 330, 332, and 334 can have a flow rate over a range from about 50 ml/min for a neonate to about 6.5 L/min for an adult.

A blood pressure (B.P.) pump 318, implemented as a positive displacement roller pump, couples output conduit 317 with input conduit 322 to provide a baseline heartbeat and pressure in input conduit 322 for initial coupling of patient module 101 to a therapeutic device, as part of the protocol for establishing a connection between and confirming the connection with a heartbeat and pressure. That is, some therapeutic machines check for a patient pulse prior to initiating treatment. The speed of the pulsating B.P. pump 318 matches the patient heart rate as dictated by the clinical scenario. The volume of the venous reservoir 304 can be adjusted to accommodate different patient sizes by manually inserting a displacement object inside the reservoir or by adjusting the volume (VOL) level sensor 309 such that the threshold level is lower for a smaller size patient. Temperature sensor 331 provides temperature reading for the fluid in the venous reservoir 304. The fluid sensors for flow 307, pressure 320 and resistance 334 of the fluid flow in input conduit 322 is common to HLM 110, ECMO machine 112, VAD machine 116, and aortic balloon pump 119 since all these therapeutic devices access blood and are concerned with measuring pressures and flows and modeling the body to show responses to different protocols and devices that affect the pressure and flow.

Variable resistance symbol represent variable pressure drops in fluid conduit between patient and heart lung machine to simulate a pinched or occluded catheter, or a catheter pressed against the wall of the heart or vessel that can stop or restrict the blood flow. The variable pressure drop can be accomplished by any mechanical means of restricting the effective diameter of the tubing. For example, stepper motor valve 334 can be controlled by feedback from the pressure transducer 320 and thereby be used to maintain the blood pressure to match the readout in the algorithmic model and on the ICU monitor.

Therapeutic device options 103 include any one of the HLM 110, ECMO machine 112, HIPEC 118, VAD machine 116, and balloon pump 119 are all selectively coupled to input port 323 and output port 316 as the two common fluid ports of patient module 101 that apply to each of the therapeutic device options 103. Note that input conduit 322 and output conduit 317 are referred to generally as 'input' and 'output' because the specific human blood vessels they represent are different from each other. For example, for the HLM 110, input conduit 322 represents an arterial blood vessel, while output conduit 317 represents a venous blood vessel. In contrast, for the ECMO machine 112, input conduit 322 represents an arterial or venous blood vessel, while output conduit 317 represents a venous blood vessel. This embodiment for ECMO allows a different simulated blood path of venous out/ venous in (VV) or venous out / arterial in (VA) to the patient module 101 without any plumbing hardware changes in the fluid circuit 301. As another example, for the HIPEC machine 118, input conduit 322 represents an input to the peritoneal cavity, while output conduit 317 represents an output to the peritoneal cavity. In contrast, for the VAD machine 116 and balloon pump 119, input conduit 322 represents a ventricular blood vessel, while output conduit 317 represents an atrial blood vessel. Just as input line 322 and output line 317 can be configured and labeled to represent different blood vessels in the body, so can stepper valves be configured and labeled to represent different functions and settings, depending upon the therapeutic device option chosen and the clinical scenario operated on the simulation system. For example, stepper valve 334 provides the resistance in the arterial (input) line 322 to maintain an arterial blood pressure reading 320 at the pressure indicated on the patient display /delivery device 108, described hereinafter. This arterial blood pressure is determined by several factors dictated by the clinical scenario including the patient size, clinical pathology and blood flow 306 generated by the heart lung machine 110 or ECMO machine 112. Likewise, stepper valve 332 controls the rate of blood drainage from the patient through the venous drain. Partially closing valve 332 will result in an accumulation of blood in reservoir 304 with the concomitant increase in the patient's simulated blood volume and reflex alterations in blood pressure, etc.

The flexibility of patient module 101 arises from, in part, tracking and labeling the inputs to and outputs from microcontroller 305, which are subsequently communicated to computing device 102, according to an identified one of the therapeutic device options 103 utilized in the clinical scenario. Thus, for HLM simulation, pressure 320 and flow meter 307 sensor outputs are labeled and evaluated in the clinical scenario as 'arterial' blood vessel values, while the same sensor outputs are labeled and evaluated in the clinical scenario as 'peritoneal' fluid values for a HIPEC simulation. Optional heater (HTR) / cooler 311 is coupled to the HLM 110 and the ECMO machine 112 for improved features in the clinical scenario. The HLM 110 requires additional plumbing that is provided in patient module 101 as pump sucker 312 and LV vent line 310, which are included in the superset of fluid conduits 301 to as to provide the universal application to therapeutic device options 103.

Microcontroller (uController) 305 interfaces multiple input lines (I-1 through I-6), for sensing input values, and multiple output lines (O-1 through O-4), for controlling the different control devices, via an analog to digital (A/D) converter 303. In particular, inputs to uController 305 include CP flow meter 306 input I-1, CP temperature 308 input I-2, input conduit flow meter 307 input I-3, venous reservoir temperature 309 input I-4, venous reservoir level 309 input I-5, and input conduit pressure 320 as input I-6. In particular, outputs from uController 305 include input conduit stepper valve 334 as output O-1, output conduit stepper valve 322 as output O-2, CP stepper valve 330 as output O-3, B.P. pump 318 control as output O-4. Microcontroller 305 includes programmability functions with memory for storing firmware or software, e.g., on EEPROM, such that microcontroller 305 can behave 'reflexively' to conditions sensed in patient module 101. Thus, for example, if volume level sensor 309 input I-5 reaches a low threshold, i.e. an indication that the patient is bleeding out, then uController 305 reads that low threshold value, and outputs a signal to close CP conduit stepper valve 330, thereby maintaining fluid in patient module 101 and avoiding a dry operation, while indicating to a HLM 110, via the pumped fluid, that a problem exists.

Microcontroller 305 is a real-time and modular embedded control system that, in one embodiment, includes a processor, FPGA, 512 MB built in memory, and ten slots for modules, all coupled to each other. Available modules include analog I/O, industrial digital I/O, TTL I/O, reed relays, RTDs, SSRs, stepper driver and other control functionality. The simulator software takes the sensor readings and uses them as input into the physiological algorithms to generate the patient's responses and drive the O.R. monitor. Scenario actions that require mechanical responses will drive the uController 305 to control the pump and stepper valves as shown in **Figure 3****.** While the specific embodiment is provided herein for microcontroller 305, those skilled in the art appreciate that a wide variety of computing devices can be utilized to provide the control and computations needed in patient module 101.

Microcontroller 305 is coupled to computing device 102 via the A/D converter module 303 such that data from the patient module 101, e.g.,, bypass blood flow rate, cardioplegia flow and circulating blood volume, is communicated to computing device 102 and combined with data from sensors and actuators to detect and react appropriately to the inputs imposed by the various extracorporeal and cardiopulmonary support devices on the human body. These reactions include the dynamic and long-term impact on the cardiovascular system, the respiratory system, the hematological system, and the renal system.

Still referring to **Figure 3**, an IV fluids drip bag (shown 115 in **Figure 1**) is coupleable to patient module 101 directly (not shown), or indirectly via reservoir 117, for the clinician to administer additional fluid. This is included as part of the simulation because adding fluid is a common treatment used to increase the circulating blood volume of the patient. This will greatly affect the blood pressure and cardiac output. Patient module 101 can sense any fluid administration by measuring changes in the venous reservoir volume via a level sensor 309. If the clinician administers more volume from the IV bag (for example in response to a falling blood pressure as dictated by the clinical scenario), the simulator will respond with an appropriate increase in the algorithmically generated virtual value of central venous pressure (CVP) as well as an increase in blood pressure 320 resulting in an increase in algorithmically generated cardiac output and algorithmically generated mixed venous 02 saturation (SVO2). (See **Figure 5A**, bottom middle)

The HLM 110 and the ECMO machine 112, as well as the HIPEC machine 118, VAD machine 116, and aortic balloon pump 119, can be standard hospital equipment to which a patient would be coupled, e.g., by tubing that represents blood flow from the patient's artery and vein to the input and output of the Heart/Lung machine (HLM) and /or ECMO machines (ECMOM). No electrical connections are required between the patient simulators and the hospital machines in the present embodiment. However, in another embodiment, sensors can be placed on the patient module, e.g., to measure a patient's temperature, blood pressure, blood 02 rate, etc. The readouts from those sensors can be fed to diagnostic and therapeutic machines 103 or those mentioned in the next section, to provide input and feedback, and more realistically represent a patient's interaction with the machines. By replacing the patient with the patient module 101, different patient scenarios and responses can be presented to the clinician, with the clinician's input and changes being accurately represented therein. The hardware portion of the patient module 101 provides controlled temperature, fluid flow rates or blockages, modulated pressure, pressure spikes or pressure drops, and accurate volumetric representation of a human cardio pulmonary system via the uController 305 and/or the computing device 102 controlling the valves and pump in the patient module 101. The interaction of the software models and the hardware and measurement and metrics input to the software model to allow the simulation system to simulate patient treatments and responses. Some patient treatments are provided as virtual interfaces with the diagnostic/treatment machines, e.g., communicated on link 131 and displayed on patient monitor/delivery device 108 via computing device 102 software algorithm and model for the delivery of drugs, reaction to drugs, contraindications, etc. in response to an operator's selection of type of drug, quantity of drug, and rate of delivery. Other patient conditions such as activated clotting time (ACT), heparin resistance, elevation of blood pressure, heart failure. pathologies, etc. can be programmed with variety of degrees of cardiovascular disease and representative equipment malfunction, simulated ventilator performance for controlling 02 and CO2, etc., while simulating the patient transition on or off the ECMO machine as would be done clinically.

The hydraulic portion of the patient module 101 simulates the blood flow between the ECMO machine 112 and the patient. That is, patient module 101, via an interactive system, pumps fluid (e.g., colored water to simulate blood) between patient module 101 and any of the therapeutic machine options 103. This simulation provides a more life-like representation of the interaction between the three primary interactions in patient treatment: i) between a patient and the ECMO or CPB machine, ii) between the operator and the patient, e.g., delivering drugs, and iii) between the operator and the ECMO machine, e.g., modifying controls of the ECMO machine. Thus, the present system provides a full bidirectional communication, interaction, and feedback between the three primary components of the system. Any combination or permutation of conditions and reactions between the three primary interactions can be provided as desired by the programming steps provided hereinafter.

Patient module 101 may be selectively operated in multiple modes, including a real mode or in a simulation mode. In the real mode, computing device 102 interacts with the patient module 101 to evaluate at least one fluid property measured and to provide a signal to the at least one control device disposed. In the simulated mode, no interaction exists between patient module 101 and computing device 102, with computing device 102 calculating all data for patient module 101. In a hybrid mode, the patient module 101 measures flow and volume, and models patient responses (with proprietary physiological models that simulate responses), but with no feedback, no valves, etc. that would measure the interaction with the ECMO machine 112. In this mode, the patient attributes can be modeled in the patient module 101, e.g., sicker patient, recovering patient, an acute condition or crashing patient, etc. This baseline patient module 101 is a cost-effective tool for new trainees. Features can be manually performed on this baseline patient module 101, such as manually closing off a hose, to simulate a kink in the catheter.

However, as competence grows, a trainee should transition to another embodiment of the patient module 101 that does provide an output and does receive an input (feedback) that measures and receives changes to the patient module 101. This 'smart' ECMO patient module provides more life-like responses and interactions that would prepare a clinician for the complications that frequently arise in treating real patients.

Referring to **Figure 4**, a schematic diagram of the patient monitor/delivery device 108 in ECMO mode is shown according to one or more embodiments. The balance of simulator system 100 interactively interfaces with the patient module 101, one or more diagnostic or patient therapeutic machine options 103, and simulated (virtual) physiological systems such as drug administration, (together "components") and the settings, operator changes to the settings, instructor changes, the components, responses from the components, in a single integrated system. Fluid is pumped between the ECMO machine 112 and the patient module 101 while flow rates and volumes are being measured for compliance to acceptable standards using flow meter 307 and volume level 309. Oxygenation generation and CO2 removal are simulated by computing device 102 for ECMO machine 112 using modeling algorithms that the operator can manipulate via the touch screen of the patient monitor/ delivery device 108. Real-time feedback, programmable patient parameters and scenario settings, instructor overrides and modifications provide a nearly indefinite number of testing scenarios through which competent technologists can be trained.

In particular, the simulator system can simulate blood clotting properties and three concurrent blood gasses (pre-Oxygenator, Post-oxygenator, and patient blood gasses, arterial and venous). It can provide full interaction between all four properties to track and model how a change in one or more properties will affect the other properties. It can also model how cardiovascular changes arise, and how pulmonary functions interact with a fluid pump in ECMO machine 112 and ventilator simulator and algorithmically defined patient condition provided by computing device 102. While a default set of algorithms are presented for simulation system 100 in the present embodiment, a user can programmably enter different algorithm formulas, weighting values, and settings for an alternative configuration.

An optional ancillary O.R. monitor (not shown), besides showing typical cardiovascular parameters, can also display any of several ancillary O.R. monitor functions such as the ACT machine, in-line blood gas monitors or outputs from various point of care (POC) devices such as blood gas analyzers or heparin management system (HMS) printouts. Which ancillary monitors are used and when they are visible during the case can all be controlled using simulator GUI via instructor display 104. Any of several different electrocardiogram (EKG) patterns can also be displayed including sequentially advancing to an arrest EKG pattern upon sensing adequate delivery of cardioplegia. Using a touch screen, the operator can administer drugs, print strip charts of lab data generated by the simulator, and make adjustments in gas flow and fraction of inspired oxygen (FIO2) of the CPB sweep gas.

### Controller Display

Referring now to **Figure 5A****,** a controller display 104 is shown according to one or more embodiments. The instructor display 104 serves as the "controller display" GUI to be used by the instructor or simulation operator. This panel allows the operator to manipulate various physiological parameters related to the patient, change the types of monitors displayed on the O.R. monitor screen as well as control the progress of the clinical scenario.

The proprietary software of simulator system 100 is very customizable which allows the trainer to write custom clinical scenarios for the trainee. Examples of diagnostic and patient-servicing machines include blood pressure monitors, EKG monitors, ventilators, Activated Clotting Time (ACT in-line blood monitoring systems, pulse oximeters, spectrum variable input patient electronic record display, homeostasis management system (HMS), blood gas analyzer, and cerebral oximetry (NIRS). Inputs from these machines can be fed to the simulator CPU via data cable. Alternatively, the data can be communicated in a table format, e.g., in a spreadsheet format, that is usable by the system and software.

Data from any of the aforementioned sources can be modeled and presented on the display for the operator and instructors as an additional or alternative O.R. display parameter. For example, channels or parameters can be shown on the O.R. monitor for bispectral index "BSI" or thromboselastogram ("TEG"), and a variety of different Lab diagnostic printouts.

Patient specific factors (sex, height, weight), physiologic factors including left ventricle (LV) and right ventricle (RV) contractility, heart rate, pulmonary functions (pulmonary compliance, shunt fraction, dead space) depth of anesthesia and metabolic rate can all be specified through the scenario or by the controller display. By adjusting these factors, pre-existing co-morbidities can be simulated and actual patient physiology can be controlled according to temperature and drug load.

### Clinical Scenarios

Clinical scenarios in the present disclosure can be preloaded and called up and applied in a variety of timings, stop/start on command, printed out on a local device or stored on electronic or medical data storage devices, such as a USB drive, a network drive, or memory 206 of **Figure 2A****.** Other clinical monitors and analyzers can be shown on the patient monitor/delivery device 108 and can be activated and utilized at the discretion of either the trainee or the instructor based on their input to the system. Additionally the clinical scenarios can also activate the various monitors, analyzers and other clinical devices. All three patient simulators are self-contained. They do not require additional devices such as the EKG machine or Blood Pressure Monitor.

### Absolute Mode

Referring to **Figure 6**, a clinical scenario spreadsheet is shown according to one or more embodiments. Clinical Scenarios can be written and loaded into the Simulator as a spreadsheet. Each column represents either a different control from the Controller display or a specific action to be performed. Each row defines a different step (Scenario Steps) that determines all of the settings and variables that define the patient and the patient monitoring choices. Below is a composite view of an actual spreadsheet used to program a clinical scenario composed of three steps illustrating the 56 individual variables that are manipulated by the simulator.

The first three columns define the step number, name and the length of time (duration) that the simulator will wait before advancing to the next step. This information is then displayed on the drop-down table near the middle of the controllers screen (see **Figure 5A**) This scenario table along with the Scenario Progress bar and the green and red "GO" and "Stop" buttons below it are controls the operator can use to start and stop the automatic progression, jump to any other step and otherwise monitor the progress of the scenario.

The next five columns define the Patient ID, sex age height and weight. This information will be used by the computer models (algorithms) that will determine many of the physiological parameters and responses of the patient. The next five columns (I-M) are data used to define the "Heparin Sensitivity" of the patient and represent variables used to for the "Heparin Management System" (HMS). The display output for the HMS can be called up by the clinician using a button on the touch screen that will also be printed by the receipt printer. The "Surgical Events", column O, are entries that can be used to communicate with the clinician to indicate the progress of the surgery. This entry shows up at the top of the "O.R. monitor". The next two columns, P and Q are used to control the O.R. clock shown at the top left of a monitor. "Time Factor" dictates how fast the O.R. clock will move. For example, with an entry of 10, the O.R. clock will move ahead ten seconds every second. "Advance" is used to force the O.R. clock to jump ahead. The "Text to Speech" and "Voice" columns (R and S) will cause the simulator to talk, using one of three voices as determined by the "Voice" entry. Column T (Anesthetic Factor) allows the operator to adjust the depth of anesthesia for the patient. This will cause a change in the rate of metabolism for the patient that will in turn alter the rate of Oxygen consumption and CO2 production via the metabolic algorithms in the models.

Columns U through W adjust the cardiovascular health of the patient. Manipulations of these variables will show up as changes in the pressure waveforms (and pressure values) shown on the "O.R. monitor".

Surgical application of the aortic "cross clamp" can be initiated with a true entry in column X, causing the heart to stop ejecting blood and the blood pressure to fall (unless the heart lung machine operator is performing their task appropriately).

Columns Y, Z and AA control variables associated with "Cardioplegia" delivery (anesthetic for the heart). The simulator has flow sensors that will measure the delivery of cardioplegia from the heart lung machine. Column Y dictates whether the cardioplegia will enter the heart in an antegrade or retrograde (against the normal blood flow pattern). The flow factor (column Z) dictates the speed to which the heart will respond to the delivery. As cardioplegia is delivered, the EKG pattern will automatically cycle through 12 individual patterns ranging from a normal pattern to a flat line depending on the rate of the cardioplegia delivery. If the cardioplegia is being delivered retrograde, the CVP pressure trace (dashed bottom line in **Figure 4**) will automatically convert to a display of "coronary sinus pressure" indicating the driving pressure of the cardioplegia. The "Retrograde Resistance" column (AA) can then be used to indicate the resistance to flow, affecting the pressure displayed on the monitor.

The patient's bladder temperature and arterial and venous blood temperatures are dictated by columns AB, AC and AD. Which of the twelve EKG patterns is displayed and the patient's heart rate are set by entries in columns AE and AF. The patient's accumulated urine output is control by column AG and the results are continuously displayed on the O.R. monitor. The next ten columns (AH-AR) represent lab results for various blood values. Some of these values are displayed on the on-line blood monitors. Some are used in the computer models to calculate secondary variables and some are displayed in the lab results print-out

The activated clotting time (ACT) analyzer is controlled by the next four columns (AT-AW). This ACT analyzer becomes visible by a true condition in column AY. ACT 1 and ACT 2 (columns AT and AU) dictate the resultant clotting time after the analysis is complete. The time factor allows the machine to advance faster than real time to allow it to move to completion without the need to wait the entire time for the result. A TRUE value in the start column (AW) will initiate the analysis.

The remaining nine columns determine which of the available monitors and analyzers will be visible on the O.R. monitor screen.

An entry of 'true' in column AX and BC will display the blood analyzer strip showing the results of the blood gas analysis. An entry of 'false' in the last column (BD) will display the results of the venous blood gas and 'true' will display the results for arterial blood. These results can be printed out on the receipt printer if the clinician presses the red button labeled 'call for blood gas' shown on the O.R. monitor.

In addition to pausing and restarting the scenario, the controller can change any one of the functions represented by columns in the programming spreadsheet. Each of these functions is represented by an individual control on the Controllers Display (see **Figure 5A**).

The controller also has the option of saving pertinent patient data in an "electronic medical record" of the case. Data relevant to the case can be stored in a separate spreadsheet that time stamps the data.

Comments from the controller can be entered during the case by typing into a data entry box in the middle of the Controllers Display and hitting the "Submit" button (see **Figure 5A**).

### Calculated Mode

A patient monitor/ delivery device can be used in "Calculated Mode" (not shown) according to one or more embodiments. The major difference between the "Absolute Mode" and the "Calculated Mode" is that the "Calculated Mode" provides the ability for the simulator to calculate various blood gas parameters based on the actions of the clinical operator instead of dictating the values as described above. In the case of the Calculated Mode, a ventilator option is included on the patient monitor/ delivery device.

In calculated mode, the clinician can make the patient ventilator visible on the O.R. monitor screen (highlighted with the red circle) by touching the lower green button off to the far right labeled "Ventilator". "Pressure Mode" ventilation or "Volume Mode" ventilator options can be selected. The ventilator is operated by first touching the knob on the ventilator to activate it, and then turning the large thumb wheel in the far left bottom corner to adjust the parameter accordingly. All of the blood gases including pH and venous 02 saturation will respond accordingly based on the patient's size and temperature by means of the algorithm models in the simulator. In addition, variables for ventilating the artificial lung in either the heart lung machine or ECMO machine can be adjusted by means of the "Oxygenator Controls" (highlighted by the yellow circle) made visible by the upper green button to the far right. Changes in the "Oxy Sweep" (upper control) or "Oxygenator FIO2 (middle blue knob) will also change the patient's blood gases and pH depending on the blood flow rate being delivered by the heart lung machine or ECMO machine. Both the ventilator and machine oxygenator are working concomitantly, allowing the operator to adjust each independently. This makes it possible to challenge the clinician to determine whether the patient is well enough to allow termination of the extracorporeal blood support and therefore transition to the ventilator alone.

The spreadsheet used to load the scenario for the "Calculated Mode" has some differences from that described above for the "Absolute Mode". For the "Calculated Mode", the first difference is the inclusion of parameters describing the patient's lung disease. Dead space (S), Pulmonary Shunt Fraction (V), Airway Resistance (W) and Pulmonary Compliance (X), are variables that characterize the degree of lung disease suffered by the patient. Changes in any one of these parameters require a specific change in the adjustment of the ventilator and will have an effect on the blood gas results. Likewise, Oxygenator Shunt (T) defines the effectiveness of the artificial lung and together with Cannula Recirculation (U) will determine the impact of the heart lung or ECMO machine.

Another major difference in scenario parameters is the lack of any blood gases in the "Calculated Mode" scenario since these are all being calculated. Likewise, instead of dictating the patient's bladder temperature, the "Calculated Mode" relies on the temperature probe in the simulator reservoir for the value used in the algorithms and displayed on the O.R. monitor screen.

Referring now to **Figure 7**, a flowchart 700 of a process simulating a patient interaction with a therapeutic machine is shown, according to one or more embodiments. Flowchart 700 is implemented on processor 202 and memory 206 of computing device 102 with relevant data communicated between patient module 101, patient monitor/delivery device 108, and computing device 102, as appropriate for the protocol. Flowchart 700 initiates a clinical scenario in operation 704, per input from instructor or clinician calling up an executable file from computing device 102 of **Figure 1** and providing a therapeutic device selection input 704-A, e.g., an ECMO machine. If the simulation system 100 is operated in real mode, then an identified therapeutic device from the therapeutic device option set 103 is coupled to the patient module 101. Else, if the simulation system 100 is operated in simulation mode, the identified therapeutic device can either be coupled to the patient module 101, or not, since any physical device inputs are ignored, and the entire clinical scenario is executed in a virtual mode.

In operation 705, data is read from a sequential step of the electronic file, i.e., from all relevant fields, such as columns A through BD of a spreadsheet file, as described in the prior **Figure 6****.** Operation 708 evaluates the data from the spreadsheet for the given sequential step. For example, spreadsheet columns relating sex, age, height, weight, body fluid and organ temperatures, urine output, and degree of lung disease, or other pathology will be evaluated by one or more algorithms 262 of **Figure 2B** operating in the clinical scenario module 252, which is executed the processor 202 and memory 206 of computing device 102. Operation 708 also accepts input from many different sources, such as virtual patient and control data input 708-A, which is data the algorithm synthesizes internally from spreadsheet data that was just read. For example reading a patient data on heart conditions in one algorithm can then provide input to another algorithm, such as a cardio algorithm, that internally degrades a baseline related heart metric because of the given patient pathological conditions. Another input to the evaluation operation 708 is physical device sensor data 708-B, e.g. pressure and flow data sensed by ucontroller 305 via A/D 303 in patient module 101 and communicated to computing device 102 via link 130, as shown in **Figures 1** and **3****.** For example, while a given patient module might appear properly coupled to an ECMO machine for an ECMO simulation, the actual initiation of a transfer of fluid from patient module 101 to ECMO machine 112, might expose a flaw in the physical coupling of the tubing. This might lead to a change in measured performance, such as a miscoupled port having a leak and thereby resulting in a drop of measured pressure 320 on input line 222 of **Figure 3A** that is then communicated to algorithm evaluation operation 708. Virtual device adjustment input 708-C can also be input to operation 708. This input can arise from an adjustment by the clinician ab initio or preemptively, i.e., before the simulation finishes evaluating the sequential step in the simulation system 100. Another input is instructor input 708-D, which can implement a wide range of control adjustments or timing, as described in **Figure 5A**. Finally, annotations input 708-E can be input to the system by instructor or clinician for noteworthy conditions, reactions, or performances. An output of recording data 708-F can record any time-sampled rate of physical and virtual data, ranging from the equipment settings, to the simulated patent vital signs, along with annotations to capture the overall performance.

As the algorithms evaluate the input data provided in operation 708, that resulting output data is communicated to user displays in operation 710. For example, patient physiology and virtual control information, as discussed in **Figure 5A****,** can be communicated to user display(s), e.g., to instructor on computing device 102, and to clinician via patient monitor/delivery device 108, of **Figure 1****.** The clinician might receive data such as patient physiological conditions and optional simulated (virtual) physiological systems such as drug administration, (together "components"). The instructor display receives a more complete suite of information for control and testing purposes.

In parallel to information being passed to user displays, other information from the algorithm evaluation operation 708 is communicated to physical devices in operation 712. Algorithm outputs are provided on electrical, optical, etc. lines 130 to physical control devices in patient module 101, e.g., stepper valves 330, 332, 334, B.P. pump 318, etc. to set the simulated patient scenario for the clinician. Thus, if the patient being simulated by the patient module 101 is an overweight adult male with acute arterial sclerosis, a signal can be communicated to stepper valve 334 that will reduce its internal diameter significantly from what would otherwise be a normal diameter size for a healthy patient. Many other application specific scenarios can be presented in the data of the spreadsheet.

Another parallel branch of output from the algorithm evaluation operation 708, is operation 714 of communicating audio/visual (A/V) broadcast data to the user. For example, a text to speech instruction can be executed on a speaker system of patient monitor/ delivery device 108 to communicate a statement, order, question, or other interaction with the clinician/ operator. In another example, a video clip of a surgeon head-cam can begin playing at the time a step for initiating the HLM is given. Alternatively, a video or still picture of a clinical or diagnostic test, such as an angiogram, requested by the clinical scenario can be brought up.

Thus, with the multiple parallel branches for data output from the algorithmic evaluation operation 708, the system provides a near real-time experience for the clinician with many changes occurring at once. For operations or conditions that are meant to be serial, data can be provided for in subsequent steps in the spreadsheet. Alternatively, only one variable can be changed at a time, with all other variable in the spreadsheet remaining constant across multiple steps.

As the algorithm evaluates the data, and as the patient module 101 and the therapeutic devices begin to react, the simulation system will receive inputs in operation 716 from a user of the simulation system who has evaluated the situation and is reacting by changing settings on physical control devices or virtual control devices, as inputs 716-A and 716-B, respectively. Recording data operation 716-C can electronically store the inputs 716-A and 716-B along with the patient's physiological data, both from physical sensors and from virtually simulated vital signs for subsequent analysis and grading of the clinician.

In operation 718, an inquiry determines whether a change in the sequence of the clinical scenario is desired. If no change is desired, then operation 719 advances the clinical scenario to the next sequential step in the spreadsheet, and the flowchart 700 repeats, starting at operation 705 of reading of data from that next sequential step. If, however, the instructor does wish to adjust the timing of the clinical scenario, and then input 722-A from instructor can change clinical scenario timing in operation 722. The timing can be halted, accelerated, stepped forward in time, slowed down, sped up, or the clinical scenario could be canceled. This operation allows an instructor to input commands via instructor display 104 to processor 202 in computing device 102 for altering the timing. For example, an instructor may wish to advance to a step halfway through a given clinical scenario for focusing a clinician on a discrete operation. If the clinical scenario is not canceled by the instructor, then after operation, the clinical scenario advances to the next sequential step in the spreadsheet, and flowchart 700 repasts.

Once a clinical scenario has been completed or stopped, a different clinical scenario may be uploaded in software, and an entirely different scenario tested on the clinician. Alternatively, after a given clinical scenario has been completed or stopped, a therapeutic device coupled to the patient module 101 can be changed to a different therapeutic device in just minutes, and another clinical scenario for the new therapeutic device can be run on the same patient module 101 and computing device 102 equipment. Alternatively, the same patient physiological data can be reused on the new therapeutic machine, and thus offer a closely timed comparison of how different therapeutic machines will result in different vital signs and different long-term clinical course results.

### Alternative Embodiments

References to methods, operations, processes, systems, and apparatuses disclosed herein that are implementable in any means for achieving various aspects, and may be executed in a form of a machine-readable medium, e.g., computer readable medium, embodying a set of instructions that, when executed by a machine such as a processor in a computer, server, etc. cause the machine to perform any of the operations or functions disclosed herein. Functions or operations may include receiving, measuring, communicating, altering, adjusting, transmitting, and the like.

The term "machine-readable" medium includes any medium that is capable of storing, encoding, and/or carrying a set of instructions for execution by the computer or machine and that causes the computer or machine to perform any one or more of the methodologies of the various embodiments. The "machine-readable medium" shall accordingly be taken to include, but not limited to, solid-state memories, optical and magnetic media, compact disc and any other storage device that can retain or store the instructions and information, e.g., only non-transitory tangible medium. The present disclosure is capable of implementing methods and processes described herein using transitory signals as well, e.g., electrical, optical, and other signals in any format and protocol that convey the instructions, algorithms, etc. to implement the present processes and methods.

Exemplary computing systems, such as a personal computer, minicomputer, mainframe, server, etc. that are capable of executing instructions to accomplish any of the functions described herein include components such as a processor, e.g., single or multi-processor core, for processing data and instructions, coupled to memory for storing information, data, and instructions, where the memory can be computer usable volatile memory, e.g. random access memory (RAM), and/or computer usable nonvolatile memory , e.g. read only memory (ROM), and/or data storage, e.g., a magnetic or optical disk and disk drive). Computing system also includes optional inputs, such as alphanumeric input device including alphanumeric and function keys, or cursor control device for communicating user input information and command selections to processor, an optional display device coupled to bus for displaying information, an optional input/output (I/O) device for coupling system with external entities, such as a modem for enabling wired or wireless communications between system and an external network such as, but not limited to, the Internet. Coupling of components can be accomplished by any method that communicates information, e.g., wired or wireless connections, electrical or optical, address/data bus or lines, etc.

The computing system is only one example of a suitable computing environment and is not intended to suggest any limitation as to the scope of use or functionality of the present technology. Neither should the computing environment be interpreted as having any dependency or requirement relating to any one or combination of components illustrated in the exemplary computing system. The present technology may be described in the general context of computer-executable instructions, such as program modules, being executed by a computer. Generally, program modules include routines, programs, objects, components, data structures, etc., that perform particular tasks or implement particular abstract data types. The present technology may also be practiced in distributed computing environments where tasks are performed by remote processing devices that are linked through a communications network. In a distributed computing environment, program modules may be located in both local and remote computer-storage media including memory-storage devices.

Methods and operations described herein can be in different sequences than the exemplary ones described herein, e.g., in a different order. Thus, one or more additional new operations may be inserted within the existing operations or one or more operations may be abbreviated or eliminated, according to a given application, so long as substantially the same function, way and result is obtained

Although the present embodiments have been described with reference to specific example embodiments, it will be evident that various modifications and changes may be made to these embodiments without departing from the broader spirit and scope of the various embodiments.

The foregoing descriptions of specific embodiments of the present disclosure have been presented for purposes of illustration and description. They are not intended to be exhaustive or to limit the invention to the precise forms disclosed. Many modifications and variations are possible in light of the above teaching without departing from the broader spirit and scope of the various embodiments. The embodiments were chosen and described in order to explain the principles of the invention and its practical application best, to enable others skilled in the art to best utilize the invention and various embodiments with various modifications as are suited to the particular use contemplated. It is intended that the scope of the invention be defined by the Claims appended hereto and their equivalents.

## Claims

1. A medical simulation system (100), comprising:
a patient module (101) that represents a human body, the patient module comprising:
a fluid circuit (301), with at least one fluid sensor, coupleable to different types of therapeutic machines (103) that include an extracorporeal membrane oxygenator ["ECMO"] machine (112), for interactively communicating a fluid therebetween;
a patient display/delivery device (108) coupled to the patient module;
a computing device (102) coupled to the patient module and the patient display/delivery device, the computing device comprising a processor and a memory that are coupled to each other and are configured to:
interact with the patient module to simulate one or more vital signs of the patient module as the patient module interacts with at least one of the different types of therapeutic machines; and
receive physical data of at least one measured pressure of the fluid from the sensor in the fluid circuit of the patient module and provide instructions to the patient module to implement a clinical scenario (252);
generate at least one simulated pressure signal to control a physical component in the fluid circuit based on the measured pressure for the patient module interacting with the at least one of the different types of therapeutic machines, to display on the patient display/ delivery device; and wherein:
the computing device contains a superset of programming capability for one or more different types of therapeutic machines; and
the medical simulation system simulates the clinical scenario of the human body according to a degree of a pathological condition of at least one system of the human body.

2. The medical simulation system of claim 1 wherein:
the at least one system of the human body for which a degree of pathological condition is simulated includes: a cardiovascular system, a pulmonary system, and co-morbidly both the cardiovascular system and the pulmonary system.

3. The medical simulation system of claim 1 wherein:
the fluid circuit of the patient module further comprises:
one or more variable physical controls (330, 332, 334, and 318) that simulate a degree of the pathological condition of at least one of a cardiovascular system, a pulmonary system, or co-morbidly both the cardiovascular system and the pulmonary system;
the patient display/delivery device is configured to:
receive an input instruction (252-A) to select the clinical scenario;
receive an input instruction to control the at least one of the different types of therapeutic machines to treat the clinical scenario; and
receive an input of the degree of the pathological condition of at least one of the cardiovascular system, the pulmonary system, or co-morbidly both the cardiovascular system and the pulmonary system; and
the computing device is further configured to:
receive from the patient display/delivery device, the input instruction to select and to control;
control the one or more variable physical controls of the fluid circuit;
calculate and communicate one or more virtual physiological conditions to the patient display/delivery device;
at least one of the operations of receiving, controlling, calculating and communicating is based upon the degree of the pathological condition of at least one of the cardiovascular system, the pulmonary system, or co-morbidly both the cardiovascular system and the pulmonary system; and
control the one or more variable physical controls of the fluid circuit based on the input instruction and based on the calculated one or more virtual physiological conditions.

4. The medical simulation system of claim 1 wherein:
the at least one of the different types of therapeutic machines to which the medical simulation system can interface includes a heart lung machine ("HLM") for a cardiopulmonary clinical scenario, such as a cardiopulmonary bypass clinical scenario.

5. The medical simulation system of claim 1 wherein:
the at least one of the different types of therapeutic machines to which the medical simulation system can interface includes an extra corporeal life support ("ECLS") device, a ventricular assist device ("VAD"), a dialysis machines, a hyperthermic intraperitoneal chemotherapy ("HIPEC") machine, an aortic balloon pump ("ABP"), or the ECMO.

6. The medical simulation system of claim 1 wherein:
the fluid circuit contains a superset of fluid conduits (310, 312, 315, 316, 318, 322, 304) in order to interface with any of the different types of therapeutic machines;
at least one of the superset of fluid conduits can interface with each of the different types of therapeutic machines; and
the computing device includes a superset of programming capacities in order to interface with any of the different therapeutic machines.

7. The medical simulation system of claim 1 wherein:
the computing device and the patient module are configured to model one or more reactions of one or more systems of the human body being simulated with the at least one of the different types of therapeutic machines;
the one or more systems of the human body include at least one of a cardiovascular system, a respiratory system, a hematological system, and a renal system; and
the patient display/delivery device displays an impact of the one or more reactions to the one or more systems of the human body.

8. The medical simulation system of claim 1 wherein:
the computing device can simulate at least one of a plurality of blood paths of venous out/ venous in ("VV") blood path and a venous out / arterial in ("VA") blood path to the patient module without any plumbing hardware changes in the fluid circuit.

9. The medical simulation system of claim 3 wherein the patient display/delivery device is further configured to:
receive and display physical data from the patient module;
receive the virtual physiological conditions calculated by the computing device; and
display on the patient display/delivery device, one or more selectable parameters to adjust the at least one of the different types of therapeutic machines; and wherein:
the operations of receiving data, receiving conditions, and displaying selectable parameters simulate the degree of the pathological condition of at least one of the cardiovascular system, the pulmonary system, or co-morbidly both the cardiovascular system and the pulmonary system.

10. The medical simulation system of claim 1 wherein:
the computing device is further configured to:
receive a custom clinical scenario of clinical data for at least one of: an activated clotting time, an arterial or venous color duplex imaging, a blood monitoring unit, a heparin management system, a blood gas analyzer, a cerebral oximetry, a pulse oximetry, and a bispectral index cerebral monitor.

11. The medical simulation system of claim 1 wherein additional factors of the human body being simulated include:
at least one of a plurality of patient-specific factors chosen from: a height, a sex, a weight, a body surface area, a physiologic factor of left ventricular contractility and right ventricular contractility, a heart rate, a depth of anesthesia, a metabolic rate, an arterial pressure, a pulmonary artery pressure, an EKG including multiple arrhythmias, a heparin resistance, a change in blood pressure, a heart failure, and other pathologies.

12. The medical simulation system of claim 1 further comprising:
a first machine selected from the different types of therapeutic machines;
a second machine selected from the different types of therapeutic machines; and wherein:
the medical simulation system simulates an operation and an adjustment of the first machine and of the second machine concomitantly and independently from each other; and
the clinical scenario simulates a termination of the first machine and a transition to only the second machine.

13. The medical simulation system of claim 1 wherein:
the computing device is further configured to:
degrade a baseline heart metric of the human body in a first algorithm based on input from a second algorithm that simulates the pathological condition.

14. The medical simulation system of claim 1 wherein:
the computing device is further programmed to:
model the patient attribute dynamically as one of a patient getting sicker, a patient with an acute condition, a crashing patient, and a recovering patient.

15. The medical simulation system of claim 1 wherein:
the degree of a pathological condition simulated includes at least one of a plurality of pulmonary conditions that include a dead space, a pulmonary shunt fraction, an airway resistance, and a pulmonary compliance.

16. The medical simulation system of claim 1, wherein the fluid circuit (301) is coupleable to a plurality of the different types of therapeutic machines.

## Patentansprüche

1. Medizinisches Simulationssystem (100), umfassend:
ein Patientenmodul (101), das einen menschlichen Körper darstellt, wobei das Patientenmodul umfasst:
einen Fluidkreislauf (301) mit mindestens einem Fluidsensor, der an verschiedene Arten von therapeutischen Maschinen (103) koppelbar ist, die eine Maschine für die extrakorporale Membranoxygenierung ["ECMO"] (112) umfassen, um eine interaktive Kommunikation des Fluids dazwischen herzustellen;
ein Patientenanzeige-/Ausgabevorrichtung (108), die an das Patientenmodul gekoppelt ist;
eine Rechenvorrichtung (102), die an das Patientenmodul und die Patientenanzeige-/Ausgabevorrichtung gekoppelt ist, wobei die Rechenvorrichtung einen Prozessor und einen Speicher umfasst, die aneinandergekoppelt sind und konfiguriert sind, um:
mit dem Patientenmodul zu interagieren, um ein oder mehrere Vitalzeichen des Patientenmoduls zu simulieren, wenn das Patientenmodul mit mindestens einer der verschiedenen Arten therapeutischer Maschinen interagiert; und
physische Daten von mindestens einem gemessenen Druck des Fluids vom Sensor im Fluidkreislauf des Patientenmoduls zu empfangen und Befehle an das Patientenmodul zu geben, um ein klinisches Szenario umzusetzen (252);
mindestens ein simuliertes Drucksignal zu erzeugen, um eine physische Komponente im Fluidkreislauf basierend auf dem gemessenen Druck für das Patientenmodul, das mit mindestens einer der verschiedenen Arten therapeutischer Maschinen interagiert, zu steuern, so dass es auf der Patientenanzeige-/Ausgabevorrichtung angezeigt wird; und wobei:
die Rechenvorrichtung eine Obermenge von Programmierfähigkeiten für eine oder mehrere verschiedene Arten therapeutischer Maschinen enthält; und
das medizinische Simulationssystem das klinische Szenario des menschlichen Körpers gemäß einem Grad eines pathologischen Zustands mindestens eines Systems des menschlichen Körpers simuliert.

2. Medizinisches Simulationssystem nach Anspruch 1, wobei:
das mindestens eine System des menschlichen Körpers, für das ein Grad eines pathologischen Zustands simuliert wird, umfasst: ein kardiovaskuläres System, ein Pulmonalsystem und komorbid sowohl das kardiovaskuläre als auch das Pulmonalsystem.

3. Medizinisches Simulationssystem nach Anspruch 1, wobei:
der Fluidkreislauf des Patientenmoduls weiter umfasst:
einen oder mehrere variable physische Regler (330, 332, 334 und 318), die einen Grad des pathologischen Zustands mindestens des kardiovaskulären Systems, des Pulmonalsystem oder komorbid sowohl des kardiovaskulären Systems als auch des Pulmonalsystems simuliert/simulieren;
die Patientenanzeige-/Ausgabevorrichtung konfiguriert ist, um:
einen Eingabebefehl (252-A) zu empfangen, um das klinische Szenario auszuwählen;
einen Eingabebefehl zu empfangen, um die mindestens eine der verschiedenen Arten therapeutischer Maschinen zu steuern, um das klinische Szenario zu behandeln; und
eine Eingabe des Grads des pathologischen Zustands mindestens des kardiovaskulären Systems, des Pulmonalsystems oder komorbid sowohl des kardiovaskulären Systems als auch des Pulmonalsystems zu empfangen; und
die Rechenvorrichtung weiter konfiguriert ist, um:
von der Patientenanzeige-/Ausgabevorrichtung den Eingabebefehl zum Auswählen und Steuern zu empfangen;
den oder die mehreren variablen physischen Regler des Fluidkreislaufs zu steuern;
einen oder mehrere virtuelle physiologische Zustände zu berechnen und an die Patientenanzeige-/Ausgabevorrichtung zu kommunizieren;
wobei mindestens einer der Vorgänge des Empfangens, Steuerns, Berechnens und Kommunizierens auf dem Grad des pathologischen Zustands mindestens des kardiovaskulären Systems, des Pulmonalsystems oder komorbid sowohl des kardiovaskulären Systems und des Pulmonalsystems basiert; und
den einen oder die mehreren variablen physischen Regler des Fluidkreislaufs basierend auf dem Eingabebefehl und basierend auf dem berechneten einen oder den berechneten mehreren virtuellen physiologischen Zuständen zu steuern.

4. Medizinisches Simulationssystem nach Anspruch 1, wobei:
die mindestens eine der verschiedenen Arten therapeutischer Maschinen, an die das medizinische Simulationssystem gekoppelt werden kann, eine Herz-Lungen-Maschine ("HLM") für ein kardiopulmonales klinisches Szenario, wie das klinische Szenario eines kardiopulmonalen Bypasses, umfasst.

5. Medizinisches Simulationssystem nach Anspruch 1, wobei:
die mindestens eine der verschiedenen Arten therapeutischer Maschinen, an die das medizinische Simulationssystem gekoppelt werden kann, eine Vorrichtung für Extracorporeal Life Support ("ECLS"), ein ventrikuläres Unterstützungssystem ("VAD"), eine Dialysemaschine, eine Maschine für hypertherme intraperitoneale Chemotherapie ("HIPEC"), eine aortale Ballonpumpe ("ABP") oder die ECMO-Maschine umfasst.

6. Medizinisches Simulationssystem nach Anspruch 1, wobei:
der Fluidkreislauf eine Obermenge von Fluidleitungen (310, 312, 315, 316, 318, 322, 304) enthält, um sich mit einer der verschiedenen Arten therapeutischer Maschinen zu verbinden;
mindestens eine aus der Obermenge von Fluidleitungen sich mit jeder der verschiedenen Arten therapeutischer Maschinen verbinden kann; und
die Rechenvorrichtung eine Obermenge von Programmierfähigkeiten umfasst, um sich mit einer beliebigen der verschiedenen therapeutischen Maschinen zu verbinden.

7. Medizinisches Simulationssystem nach Anspruch 1, wobei:
die Rechenvorrichtung und das Patientenmodul konfiguriert sind, um eine oder mehrere Reaktionen eines oder mehrerer Systeme des menschlichen Körpers, die mit der mindestens einen der verschiedenen Arten therapeutischer Maschinen simuliert wird/werden, zu modellieren;
das eine oder die mehreren Systeme des menschlichen Körpers mindestens ein kardiovaskuläres System, ein respiratorisches System, ein hämatologisches System oder ein renales System umfasst/umfassen; und
die Patientenanzeige-/Ausgabevorrichtung eine Auswirkung der einen oder mehreren Reaktionen auf das eine oder die mehreren Systeme des menschlichen Körpers anzeigt.

8. Medizinisches Simulationssystem nach Anspruch 1, wobei:
die Rechenvorrichtung mindestens eine einer Vielzahl von Blutbahnen der Blutbahnen venös hinaus/venös hinein ("VV") und eine Blutbahn venös hinaus/arteriell hinein ("VA") zum Patientenmodul simulieren kann, ohne dass Hardware-Veränderungen am Fluidkreislauf durchgeführt werden müssen.

9. Medizinisches Simulationssystem nach Anspruch 3, wobei die Patientenanzeige-/Ausgabevorrichtung weiter konfiguriert ist, um:
physische Daten vom Patientenmodul zu empfangen und anzuzeigen;
die virtuellen physiologischen Zustände, die von der Rechenvorrichtung berechnet werden, zu empfangen; und
auf der Patientenanzeige-/Ausgabevorrichtung einen oder mehrere auswählbare Parameter anzuzeigen, um die mindestens eine der verschiedenen Arten therapeutischer Maschinen einzustellen; und wobei:
die Vorgänge des Empfangens von Daten, des Empfangens von Zuständen und des Anzeigens auswählbarer Parameter den Grad des pathologischen Zustands mindestens des kardiovaskulären Systems, des Pulmonalsystems oder komorbid sowohl des kardiovaskulären Systems und des Pulmonalsystems simulieren.

10. Medizinisches Simulationssystem nach Anspruch 1, wobei:
die Rechenvorrichtung weiter konfiguriert ist, um:
ein spezifisches klinisches Szenario von klinischen Daten für mindestens eines der folgenden Systeme zu empfangen: eine aktivierte Gerinnungszeit, eine arterielle oder venöse Farb-Duplex-Bildgebung, eine Blutkontrolleinheit, ein Heparin-Kontrollsystem, ein Blutgasanalysegerät, eine zerebrale Oxymetrie, eine Pulsoxymetrie und eine Kontrolle des zerebralen bispektralen Indexes.

11. Medizinisches Simulationssystem nach Anspruch 1, wobei zusätzliche Faktoren des menschlichen Körpers, der simuliert wird, umfassen:
mindestens einen aus einer Vielzahl patientenspezifischer Faktoren, ausgewählt aus: Größe, Geschlecht, Gewicht, Körperoberfläche, physiologischer Faktor der linksventrikulären Kontrakilität und rechtsvertrikulären Kontraktilität, Herzfrequenz, Tiefe der Anästhesie, Stoffwechselrate, arterieller Druck, Lungenarteriendruck, EKG einschließlich mehrerer Arrhythmien, Heparinresistenz, Veränderung des Blutdrucks, Herzversagen und andere Pathologien.

12. Medizinisches Simulationssystem nach Anspruch 1, weiter umfassend:
eine erste Maschine, ausgewählt aus den verschiedenen Arten therapeutischer Maschinen;
eine zweite Maschine, ausgewählt aus den verschiedenen Arten therapeutischer Maschinen;
und wobei:
das medizinische Simulationssystem einen Vorgang und eine Einstellung der ersten Maschine und der zweiten Maschine gleichzeitig und unabhängig voneinander simuliert; und
das klinische Szenario eine Beendigung der ersten Maschine und einen Wechsel nur zur zweiten Maschine simuliert.

13. Medizinisches Simulationssystem nach Anspruch 1, wobei:
die Rechenvorrichtung weiter konfiguriert ist, um:
eine Baseline-Herzmetrik des menschlichen Körpers in einem ersten Algorithmus basierend aus der Eingabe von einem zweiten Algorithmus, der den pathologischen Zustand simuliert, zu verschlechtern.

14. Medizinisches Simulationssystem nach Anspruch 1, wobei:
die Rechenvorrichtung weiter programmiert ist, um:
das Patientenattribut dynamisch als dasjenige eines Patienten, der kränker wird, eines Patienten mit einem akuten Leiden, eines zusammenbrechenden Patienten und eines genesenden Patienten zu modellieren.

15. Medizinisches Simulationssystem nach Anspruch 1, wobei:
der Grad eines pathologischen Zustandes, der simuliert wird, mindestens einen einer Vielzahl pulmonaler Zustände umfasst, die einen Totraum, eine Lungenshuntfraktion, einen Atemwiderstand und eine Lungencompliance umfassen.

16. Medizinisches Simulationssystem nach Anspruch 1, wobei der Fluidkreislauf (301) an eine Vielzahl der verschiedenen Arten therapeutischer Maschinen koppelbar ist.

## Revendications

1. Système de simulation médicale (100), comprenant :
un module patient (101) qui représente un corps humain, le module patient comprenant :
un circuit de fluide (301), doté d'au moins un capteur de fluide, pouvant être couplé à des types différents de machines thérapeutiques (103) qui comprennent une machine d'oxygénation par membrane extracorporelle [« ECMO »] (112), permettant une communication interactive d'un fluide entre elles ;
un dispositif d'affichage/de distribution (108) de patient couplé au module patient ;
un dispositif informatique (102) couplé au module patient et au dispositif d'affichage/de distribution de patient, le dispositif informatique comprenant un processeur et une mémoire qui sont couplés l'un à l'autre et configurés pour :
interagir avec le module patient pour simuler un ou plusieurs signaux vitaux du module patient lorsque le module patient interagit avec au moins un type des types différents de machines thérapeutiques ; et
recevoir des données physiques d'au moins une pression mesurée du fluide du capteur situé dans le circuit de fluide du module patient et délivrer des instructions au module patient pour mettre en oeuvre un scénario clinique (252) ;
générer au moins un signal de pression simulé pour commander un composant physique du circuit de fluide sur la base de la pression mesurée du module patient qui interagit avec l'au moins un type des types différents de machines thérapeutiques, à des fins d'affichage sur le dispositif d'affichage/de distribution de patient ; et dans lequel :
le dispositif informatique contient un surensemble de capacités de programmation d'un ou de plusieurs types différents de machines thérapeutiques ; et
le système de simulation médicale simule le scénario clinique du corps humain conformément à un stade d'un état pathologique d'au moins un système du corps humain.

2. Système de simulation médicale selon la revendication 1, dans lequel :
l'au moins un système du corps humain pour lequel est simulé un stade d'état pathologique comprend : un système cardio-vasculaire, un système pulmonaire et à la fois le système cardio-vasculaire et le système pulmonaire dans un état de morbidité conjointe.

3. Système de simulation médicale selon la revendication 1, dans lequel :
le circuit de fluide du module patient comprend en outre :
une ou plusieurs commandes physiques variables (330, 332, 334 et 318) qui simulent un stade de l'état pathologique d'au moins un système parmi un système cardio-vasculaire, un système pulmonaire ou à la fois le système cardio-vasculaire et le système pulmonaire dans un état de morbidité conjointe ;
le dispositif d'affichage/de distribution de patient est configuré pour :
recevoir une instruction d'entrée (252-A) servant à sélectionner le scénario clinique ;
recevoir une instruction d'entrée servant à commander l'au moins un type des types différents de machines thérapeutiques pour traiter le scénario clinique ; et
recevoir une entrée du stade de l'état pathologique d'au moins l'un du système cardio-vasculaire, du système pulmonaire, ou à la fois du système cardio-vasculaire et du système pulmonaire dans un état de morbidité conjointe ; et
le dispositif informatique est en outre configuré pour :
recevoir, du dispositif d'affichage/de distribution de patient, l'instruction d'entrée de sélection et de commande ;
commander la ou les commandes physiques variables du circuit de fluide ;
calculer un ou plusieurs états physiologiques virtuels et le ou les communiquer au dispositif d'affichage/de distribution de patient ;
au moins l'une des opérations parmi les opérations consistant à recevoir, commander, calculer et communiquer étant basée sur le stade de l'état pathologique d'au moins l'un du système cardio-vasculaire, du système pulmonaire, ou à la fois du système cardio-vasculaire et du système pulmonaire dans un état de morbidité conjointe ; et
commander la ou les commandes physiques variables du circuit de fluide sur la base de l'instruction d'entrée et sur la base du ou des états physiologiques virtuels calculés.

4. Système de simulation médicale selon la revendication 1, dans lequel :
l'au moins un type des types différents de machines thérapeutiques auxquelles il est possible d'interfacer le système de simulation médicale comprend un coeur-poumon artificiel (« HLM ») associé à un scénario clinique cardio-pulmonaire, tel qu'un scénario clinique de circulation extracorporelle.

5. Système de simulation médicale selon la revendication 1, dans lequel :
l'au moins un type des types différents de machines thérapeutiques auxquelles il est possible d'interfacer le système de simulation médicale comprend un dispositif extracorporel de maintien des fonctions vitales (« ECLS »), un dispositif d'assistance ventriculaire (« VAD »), une machine de dialyse, une machine de chimiothérapie hyperthermique intrapéritonéale (« HIPEC »), une pompe aortique à ballonnet (« ABP »), ou l'ECMO.

6. Système de simulation médicale selon la revendication 1, dans lequel :
le circuit de fluide contient un surensemble de conduits de fluide (310, 312, 315, 316, 318, 322, 304) servant à un interfaçage avec n'importe lequel des types différents de machines thérapeutiques ;
au moins un conduit du surensemble de conduits de fluide permet une interface avec chaque type des types différents de machines thérapeutiques ; et
le dispositif informatique comprend un surensemble de capacités de programmation servant à un interfaçage avec n'importe laquelle des différentes machines thérapeutiques.

7. Dispositif de simulation médicale selon la revendication 1, dans lequel :
le dispositif informatique et le module patient sont configurés pour modéliser une ou plusieurs réactions d'un ou de plusieurs systèmes du corps humain faisant l'objet d'une simulation par l'au moins un type des types différents de machines thérapeutiques ;
le ou les systèmes du corps humain comprennent au moins un système parmi un système cardio-vasculaire, un système respiratoire, un système hématologique et un système rénal ; et
le dispositif d'affichage/de distribution de patient affiche un impact de la ou des réactions sur le ou les systèmes du corps humain.

8. Système de simulation médicale selon la revendication 1, dans lequel :
le dispositif informatique peut simuler au moins un trajet parmi une pluralité de trajets de sang d'un trajet de sang veineux de sortie/veineux d'entrée (« VV ») et d'un trajet de sang veineux de sortie/artériel d'entrée (« VA ») vers le module patient sans aucune modification de matériel de tuyauterie du circuit de fluide.

9. Système de simulation médicale selon la revendication 3, dans lequel le dispositif d'affichage/de distribution de patient est en outre configuré pour :
recevoir et afficher des données physiques provenant du module patient ;
recevoir les états physiologiques virtuels calculés par le dispositif informatique ; et
afficher, sur le dispositif d'affichage/de distribution de patient, un ou plusieurs paramètres pouvant être sélectionnés pour régler l'au moins un type des types différents de machines thérapeutiques ; et dans lequel :
les opérations de réception de données, de réception d'états et d'affichage de paramètres pouvant être sélectionnés simulent le stade de l'état pathologique d'au moins l'un du système cardio-vasculaire, du système pulmonaire, ou à la fois du système vasculaire et du système pulmonaire dans un état de morbidité conjointe.

10. Système de simulation médicale selon la revendication 1, dans lequel :
le dispositif informatique est en outre configuré pour :
recevoir un scénario clinique personnalisé de données cliniques d'au moins l'un : d'un temps de coagulation activée, d'une imagerie en duplex de couleur artérielle ou veineuse, d'une unité de surveillance de sang, d'un système de gestion d'héparine, d'un analyseur de gaz sanguin, d'une oxymétrie cérébrale, d'une oxymétrie pulsée et d'un moniteur cérébral d'indice bispectral.

11. Système de simulation médicale selon la revendication 1, dans lequel des facteurs supplémentaires du corps humain faisant l'objet d'une simulation comprennent :
au moins un facteur parmi une pluralité de facteurs spécifiques à un patient choisi entre : une taille, un sexe, un poids, une surface corporelle, un facteur physiologique de contractilité ventriculaire gauche et de contractilité ventriculaire droite, une fréquence cardiaque, une profondeur d'anesthésie, un taux métabolique, une pression artérielle, une pression d'artère pulmonaire, un ECG présentant de multiples arythmies, une résistance à l'héparine, une variation de pression sanguine, une insuffisance cardiaque et d'autres pathologies.

12. Système de simulation médicale selon la revendication 1, comprenant en outre :
une première machine sélectionnée parmi les types différents de machines thérapeutiques ;
une seconde machine sélectionnée parmi les types différents de machines thérapeutiques ; et dans lequel :
le système de simulation médicale simule un fonctionnement et un réglage simultanément de la première machine et de la seconde machine et indépendamment l'une de l'autre ; et
le scénario clinique simule une fin de fonctionnement de la première machine et un passage uniquement à la seconde machine.

13. Système de simulation médicale selon la revendication 1, dans lequel :
le dispositif informatique est en outre configuré pour :
dégrader une mesure cardiaque de référence du corps humain dans un premier algorithme sur la base d'une entrée d'un second algorithme qui simule l'état pathologique.

14. Système de simulation médicale selon la revendication 1, dans lequel :
le dispositif informatique est en outre programmé pour :
modéliser dynamiquement l'attribut de patient comme étant un patient devenant plus malade, un patient dans un état aigu, un patient en état de choc et un patient en état de rétablissement.

15. Système de simulation médicale selon la revendication 1, dans lequel :
le stade d'un état pathologique simulé comprend au moins un état parmi plusieurs états pulmonaires qui comprennent un espace mort, une fraction de dérivation pulmonaire, une résistance des voies aériennes et une compliance pulmonaire.

16. Système de simulation médicale selon la revendication 1, dans lequel le circuit de fluide (301) peut être couplé à une pluralité des types différents de machines thérapeutiques.
